# EUROPEAN PATENT SPECIFICATION

(11) **EP 2 472 136 B1**
(45) Date of publication and mention of the grant of the patent: **27.05.2015**
(21) Application number: 10197447.5
(22) Date of filing: 30.12.2010
(51) Int. Cl.: F16D 69/02, C04B 35/80, F16D 65/12, F16D 69/00, F16D 65/02, B32B 18/00, C04B 35/634, C04B 35/565, C04B 35/573, C04B 37/00

(54) **Carbon ceramic friction disks and process for their preparation**
Carbon-Keramik-Reibscheiben und Verfahren zu deren Herstellung
Disques de friction céramique en carbone et son procédé de préparation

(43) Date of publication of application: 04.07.2012
(73) Proprietor: Brembo SGL Carbon Ceramic Brakes GmbH, 86405 Meitingen (DE)
(72) Inventor: Güther, Hans-Michael, 61462 Königstein (DE); Persi, Luigi, 24047 Treviglio (IT); Koch, Christoph, 86152 Augsburg (DE); Orlandi, Marco, 20831 Seregno (IT); Kahler, Michael, 86641 Rain (DE)

(56) References cited:
- GB-A- 2 444 927
- US-A1- 2002 153 213

## Description

The invention relates to carbon ceramic friction disks, and a process for their preparation.

A friction disk such as a brake disk has several main tasks: it must provide sufficient torsional strength, stiffness and stability to be able to withstand, fro example, the torque generated by decelerating a moving vehicle, it must provide an adequate friction coupling with a brake pad by adequate choice of materials which lead to a coefficient of friction of preferably between 0.3 and 0.7, and it must be able to limit the increase in temperature generated by the dissipation of rotational energy as heat.

Brake disks have been described in the literature that solve these tasks by adapting the geometry, for instance by introducing ventilation ducts into grey cast iron brake disks to provide air cooling and thus limiting the operating temperature. The remaining solid top and bottom layers provide the torsional stability and the friction surfaces. Carbon-fibre reinforced carbon disks have been in use in civil and military aircraft, as well as in Formula I racing cars. Also in this type of brake disk, one single material had to be adapted by different geometries to fulfill all tasks. This material had the advantage that the unsprung masses in the racing cars were kept low, due to the low density of the carbon material. Carbon fibre reinforcement accounted for the needed strength and stiffness. But carbon suffers from oxydative degradation at temperatures in excess of 400 °C. Brake disks made of carbon-fibre reinforced silicon carbide are stable up to much higher temperatures. Designs including separate friction layers and carrier bodies having high mechanical strength have been described, i. a. in DE 44 38 456 A1. Such carrier bodies can also be equipped with hollow spaces which allow to dissipate heat, see DE 44 38 455 C1.

US 2002/153213 A1 and GB 2 444 927 A both disclose a multi-layered carbon ceramic brake disk having a symmetrical structure with a sequence of layers of a friction layer, a ventilation layer comprising ventilation ducts, a carrier body, a second ventilation layer comprising ventilation ducts, and a second friction layer.

It was an object of the invention to provide a carbon ceramic brake disk that is optimised to meet all requirements by appropriate selection of the optimum material for each of these tasks, that can be built from standardised components which can be manufactured by processes that can easily be upscaled, and that has also an optimum of force transmission and traction as well as heat transfer between the regions of different materials which make up the brake disk. It has been found that a compound body is able to meet all these requirements, which compound body comprises at least one part which provides the needed friction properties, at least one other part which provides the needed torsional strength and stiffness, and at least one further part which provides the needed cooling behaviour. It has further been found that a technically reasonable solution is to build the brake disk in separate layers which account for the needed properties.

An object of the invention is therefore a multi-layered carbon ceramic brake disk having at least one carrier body, and at least one ventilation layer that comprises ventilation ducts, and at least one friction layer, made by joining green bodies of at least one individual carrier body, and of at least one individual ventilation layer, and of at least one individual friction layer, which green bodies comprise thermoplastic or thermoset polymeric materials, in their solid or cured states, and by subsequent carbonisation and ceramicisation by infiltration with carbide-forming elements. According to the present invention and in particular for use as brake disk in vehicle applications such as for motor-cars, trucks, and trains, the multi-layered carbon ceramic brake disk of this invention has a symmetrical structure comprising a friction layer, a carrier body, a layer comprising ventilation ducts, a second carrier body, and a second friction layer.

It is a further object of the invention to provide a process for the preparation of a multi-layered carbon ceramic friction disk which process comprises
- preparation of a green body for a friction layer by injection moulding or press moulding a mixture comprising a thermoplastic or thermoset polymeric material and at least one of fillers and additives which influence the tribological behaviour, or by tape casting a suspension comprising a particulate ceramic material, at least one of a dissolved or emulsified resinous binder having a high carbon yield upon carbonisation, and selected from the group consisting of phenolic resins, epoxy resins, and furane resins, and particulate carbon preferably in the form of ground coke or of graphite flake, thermoplastic or thermoset polymeric material and at least one of fillers and additives which influence the tribological behaviour,
- preparation of a green body for a carrier body by stacking at least two layers of a mixture comprising a thermoset resin binder, and reinforcing fibres, - preparation of a green body for a ventilation layer by press moulding a mixture comprising a thermoplastic or thermoset polymeric material, together with cores having substantially the form of the ventilation ducts to be formed, or by injection moulding a thermoplastic or thermoset polymeric material into a mould having substantially the form of the ribs or fins or stubs enclosing the ventilation ducts,
- optionally, preparation of a green body for a friction layer by injection moulding or press moulding a mixture comprising a thermoplastic or thermoset polymeric material and at least one of fillers and additives which influence the tribological behaviour, or by slip casting where a suspension of ceramic particles, preferably silicon carbide, and optionally, particulate carbon, and further optionally, at least one of fillers and additives which influence the tribological behaviour, further optionally in the presence of a binder such as a phenolic resin is cast onto a metal belt, spread with a doctor blade, and solidified by drying to form a green tape which is punched according to the needed size of the friction layer,
- optionally, applying to the interfaces formed in the stack between the said green bodies, an adhesive consisting of at least one of a solution, a paste, and a particulate or powdery solid matter, to improve the bonding between these layers,
- stacking the green bodies of the at least one carrier body, of the at least one ventilation layer comprising ventilation ducts and of the at least one friction layer, to form a stack, where the stack has the green body for the friction layer as first and last element of the stack,
- optionally, subjecting this stack to an optional pressure and thermal treatment, to improve the bonding between these layers,
- subjecting the stack to pyrolysis in a non-oxidising atmosphere under heat, to form a carbonised body, and
- infiltration with a liquid carbide-forming material, which material preferably comprises silicon, to form a ceramic body having a matrix comprising a carbide, preferably silicon carbide.

Further described herein is a process for the preparation of a green body for a friction layer by preparing and injection moulding or press moulding a mixture comprising a thermoplastic or thermoset polymer material, and optionally, fillers and additives which modify the tribological behaviour.

Further described herein is a process for the preparation of a green body for a friction layer by slip casting where a suspension of ceramic particles, preferably silicon carbide, and optionally, particulate carbon, and further optionally, at least one of fillers and additives which influence the tribological behaviour, further optionally in the presence of a binder such as a phenolic resin is cast onto a metal belt, spread with a doctor blade, and solidified by drying to form a green tape which is punched according to the needed size of the friction layer.

Further described herein is a process for the preparation of a green body for a carrier body by preparing and pressing a mixture comprising a resinous binder, and reinforcing fibres.

Further described herein is a process for the preparation of a green body for a ventilation layer by preparing and injection moulding or press moulding a mixture comprising a thermoplastic or thermoset polymeric material and and optionally, fillers and additives which modify the strength and stiffness and/or the thermal transfer properties of the resulting body, in a structured mould, or in a cylindrical mould together with cores, the mould structure or the cores having substantially the form of the ventilation ducts to be formed.

### Detailed Description of the Preferred Embodiments

The green body for the carrier body is preferably a fibre-reinforced polymer composite material, wherein the fibres must provide adequate stiffness, particularly torsional stiffness which is measured by the torsional modulus, adequate strength and stiffness, particularly torsional strength, and the needed thermal stability. This means that the fibres must be able to withstand the operating temperatures of the brake disks without significant loss in the aforementioned stiffness and strength. The matrix polymer material serves to bind the fibres during the assembling steps, and is then transformed to the final ceramic matrix material by carbonisation, and finally, formation of a carbide ceramic material by infiltration with at least one carbide-forming element, and subsequent reaction to form the carbide. During carbonisation which is a pyrolysis in the absence of air or other oxydising agents, a porous carbon material is formed from the matrix polymer material which may be either a thermoplastic or a thermoset material, optionally in mixture with fillers and/or additives.

Preferred thermoplastic materials are predominantly aromatic polymers, i. e. polymers that have a mass fraction of aromatic moieties of at least 50 %, preferably at least 60 %, and particularly preferred, at least 70 %. This mass fraction is calculated from the mass of aromatic residues, e. g., phenyl C₆H₅-, phenylene, -C₆H₄-, diphenylene -C₆H₄-C₆H₄-, naphthylene -C₁₀H₆-, in a polymer such as polyethersulphone -C₆H₄-SO₂-C₆H₄-O- or aromatic polyester -OOC-C₆H₄-COO-C₆H₄-C(CH₃)₂-C₆H₄-, or polyphenylene sulphide -C₆H₄-S-. Other useful materials are polyetherketones, polysulphone, polyphenylene sulphone, and polyetherimide.

Preferred thermoset materials are phenolic resins obtained by addition of formaldehyde to phenol or substituted phenols, and condensation of these addition products, epoxy resins derived from bisphenol A and/or bisphenol F, and furane resins.

Among the additives used, most preferred is pitch, made from distillation residues of crude oil or coal, preferably having a softening temperature of at least 100 °C (DIN 51 920), and a coke yield, measured in accordance with DIN 51905, of at least 80 %. Useful fillers are preferably selected from the group consisting of particulate carbon preferably in the form of ground coke, graphite powder, carbon short fibres having an average length of not more than 5 mm, carbon microspheres, powders of carbide forming metals such as silicon, titanium, vanadium, or chromium, and other metals of the groups of the latter three, and powdery non-oxide ceramics such as silicon carbide, silicon nitride, or boron carbide.

The reinforcing fibres are preferably fibres able to withstand high temperatures of more than 500 °C, more preferably of at least 800 °C, which are preferably selected from the group consisting of carbon fibres, silicon carbide fibres, silicon nitride fibres, boron fibres, boron nitride fibres, boron carbide fibres, aluminium oxide fibres, and zirconium oxide fibres which are stabilised by addition of yttrium oxide to avoid conversion to the monoclinic phase upon cooling.

The reinforcing fibres for the carrier body are preferably used in the form of prepregs, viz., the so-called UD-tapes, which comprise filaments in parallel alignment bound by impregnation with the thermoplastic or thermoset material as detailed supra, or in the form of non-woven or woven fibre mats which are also impregnated with the thermoplastic or thermoset material as detailed supra. It is also possible to use filament bundles that are laid in rotationally symmetric forms, such as a series of concentric circles fixed by filament bundles in radial orientation. Such reinforcing elements are commonly referred to as "tailored fibre placement", and described in EP 1339 534B1.

A preferred method to form the carrier body is to place at least two layers of impregnated UD tapes or fibre mats, woven or non-woven, on top of each other, and choosing the orientation angle so that a symmetrical and homogeneous orientation is achieved. In the case of UD tapes, two such layers are oriented in 0° and 90° with respect to each other, in the case of three UD tape layers, the orientation angles are 0°, 120°, and 240°, and for four layers, 0°, 45°, and 90°, and so forth. In the case of a woven cloth in linen weave, two layers are oriented at 0° and 45°, three layers are oriented at 0°, 30°, and 60°, and so forth. Using impregnated UD tapes or impregnated fibre cloth is preferred because the needed ring-shaped parts may simply be punched out of an impregnated tape or cloth, and then stacked to the needed height. Such process is easily automatted.

The green body for the friction layer is preferably made by mixing a thermoset resin, particularly preferred, a phenolic resin or a mixture of a phenolic resin and a pitch, with additives preferably selected from the group consisting of particulate carbon preferably in the form of ground coke, graphite powder, carbon short fibres having an average length of not more than 5 mm, carbon microspheres, powders of carbide forming metals such as silicon, titanium, vanadium, or chromium, and other metals of the groups of the latter three, and powdery non-oxide ceramics such as silicon carbide, silicon nitride, or boron carbide. It is also possible to use a thermoplastic resin together with the additives mentioned supra. Homogenising is in this case preferable made with a mixing extruder, such as a twin screw extruder, which allows the fastest and most homogeneous mixing combined with a minimum of entrapped air. Pelletising the solidified mixture allows simple and reproducible metering. A Z-arm kneader may be used for mixing both thermoplastic and thermoset materials. The homogenised mixture is then pressed to the form of a cylinder ring and cured by heating if a thermoset, or pressed at elevated temperature and cooled in the mould if a thermoplastic material is used as matrix. An elegant method to form the green bodies for the friction layer is injection moulding. In this case, the mould has to be designed in a way that joint lines are avoided as far as possible, e. g. by a circular gate at the inner circumference of the cylinder ring. Another preferred method to form the green bodies for the friction layer is slip casting or tape casting where a suspension of ceramic particles, preferably silicon carbide, and optionally, particulate carbon, and further optionally, at least one of fillers and additives which influence the tribological behaviour, further optionally in the presence of a binder such as a phenolic resin is cast onto a metal belt, spread with a doctor blade, and solidified by drying to form a green tape which is punched according to the needed size of the friction layer. It is preferred in this context to use either particulate carbon, preferably ground coke or graphite flakes, in a mass fraction of at least 20 %, based on the sum of masses of the solid constituents in the slip, or a resinous binder such as phenolic resins, epoxy resins or furane resins having a high yield of carbon upon carbonisation is present in the slip. Other fillers and additives such as those mentioned supra may, of course, also be present. The liquid used for suspending the particles may be water, or an alcohol such as ethyl alcohol.

The green body for the ventilation layer comprises a layer that has cavities and/or indentations that form the cooling channels in the friction disk. Preferably, the green body for the ventilation layer comprises a base plate which has ribs or fins or stubs on one side, or on both sides of the base plate. The space enclosed between the ribs or fins or stubs forms the cooling channel or cooling duct in the multi-layered brake disk. The base material used to manufacture the green body for the ventilation layer is preferably also a thermoplastic or thermoset material, preferably also a predominantly aromatic polymer as defined supra. Among the thermosets, also phenolic resins, furane resins, and epoxy resins are preferred. The polymers may contain additives and fillers as described supra. It is also possible to use short carbon fibres up to an average length of 5 mm for reinforcement. The green body for the ventilation layer is preferably made by injection moulding, or by press moulding, both processes allowing to realise a wide range of geometries for the cooling ducts. Most preferred is injection moulding. A circular gate is preferred, as in the case of the green body for the friction layer, to avoid the formation of joint lines. In a preferred embodiment, the moulded green body for the ventilation layer has a circular rim on the outer and inner circumferences, preferably to both sides in the direction of the axis of rotational symmetry, which allow to geometrically fix the further layers, the green body for the friction layer, and the green body for the carrier body so that symmetrical adjustment is facilitated. These rims form a part of a cylinder jacket at the inner and outer circumferences.

The multi-layered green body for the brake disk is then assembled, in a first embodiment, by stacking a green body for the friction layer, a green body for the carrier body which comprises at least two layers of impregnated UD tapes or fibre mats, woven or non-woven, on top of each other, and choosing the orientation angle so that a symmetrical and homogeneous orientation is achieved, a green body for the ventilation layer, a further green body for the carrier body, and a further green body for the friction layer, where, in a preferred embodiment, an adhesive which is preferably a phenolic resins which may also contain powdery silicon carbide or other powdery ceramic fillers or powdery carbon or graphite, is applied between the individual layers. This stack is then pressed and heated to crosslink the adhesive, the subjected to carbonisation under exclusion of oxydants at a temperature of preferably from 750 °C to 1300 °C to form a composite body of porous carbon also comprising reinforcing fibres and fillers. The composite body may be machined to remove at least those parts of the circular rim of the ventilation layer which close the cooling ducts, and is then finally subjected to infiltration with silicon or a mixture containing a mass fraction of at least 50 % of silicon, and to formation of silicon carbide, and optionally, carbides of other carbide-forming elements present in the mixture with silicon, at a temperature of at least 1420 °C, and preferably, under a reduced pressure of between 0.5 hPa and 10 hPa.

Depending on the brake load, other sequences in the stack to form the composite body of porous carbon are preferred, such as for extreme high duty brakes, a sequence of a friction layer, a first carrier body, a first ventilation layer, a second carrier body, a second ventilation layer, a third carrier body, and a final friction layer. The strength of the carrier body can be easily adapted to the load by choosing the number of fibrous reinforcement layers, which is preferably from two to ten. As discussed supra, the individual layers are oriented at different angles to achieve a homogeneous load distribution.

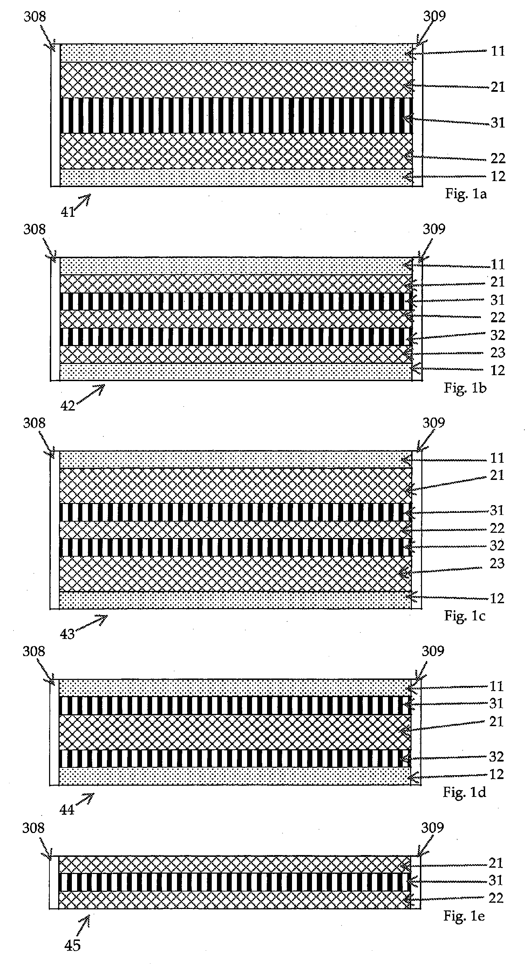

The invention is further described by the figures, wherein
- Fig. 1a: shows a section through a composite green body multi-layered brake disk 41 comprising a first friction layer 11, a higher width first carrier body 21, a higher width ventilation layer 31, a higher width second carrier body 22, and a second friction layer 12, having a circular rim 309 at the outer circumference, and a circular rim 308 at the inner circumference,
- Fig. 1b: shows a section through a composite green body multi-layered brake disk 42 comprising a first friction layer 11, a first carrier body 21, a first ventilation layer 31, a second carrier body 22, a second ventilation layer 32, a third carrier body 23, and a second friction layer 12, having a circular rim 309 at the outer circumference, and a circular rim 308 at the inner circumference,
- Fig. 1c: shows a section through a composite green body multi-layered brake disk 43 comprising a first friction layer 11, a higher width first carrier body 21, a first ventilation layer 31, a second carrier body 22, a second ventilation layer 32, a higher width third carrier body 23, and a second friction layer 12, having a circular rim 309 at the outer circumference, and a circular rim 308 at the inner circumference,
- Fig. 1d: shows a section through a composite green body multi-layered brake disk 44 comprising a first friction layer 11, a first ventilation layer 31, a higher width carrier body 21, a second ventilation layer 32, and a second friction layer 12, having a circular rim 309 at the outer circumference, and a circular rim 308 at the inner circumference, and
- Fig. 1e: shows a section through a composite green body multi-layered brake disk 45, however not particularly encompassed by the present invention but described herein, comprising a first carrier body 21, a first ventilation layer 31, and a second carrier body 22, having a circular rim 309 at the outer circumference, and a circular rim 308 at the inner circumference,

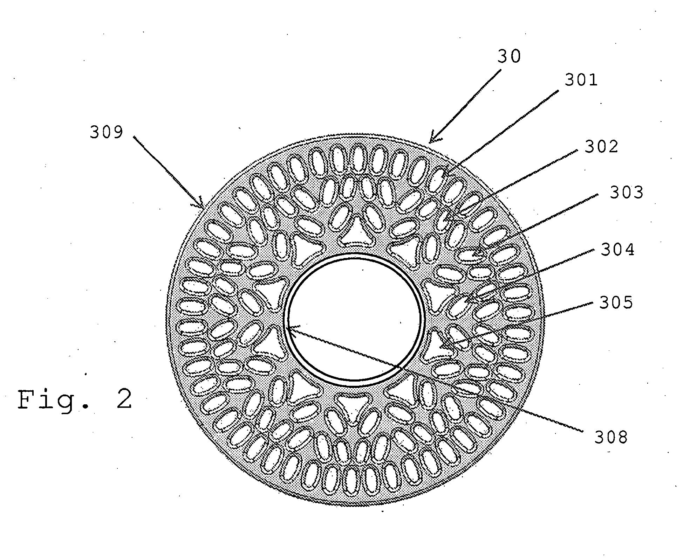

- Fig. 2: shows a view onto the structured section of a mould 30 for injection moulding of a green body for a ventilation layer where cavities 301, 302, 303, 304, 305 of elliptical and rounded triangular shape for ribs enclosing the cooling ducts are distributed in a way which allows rotation in both directions for equal ventilation effect, a cavity 308 for circular rim at the inner circumference, and a cavity 309 for circular rim at the outer circumference, and

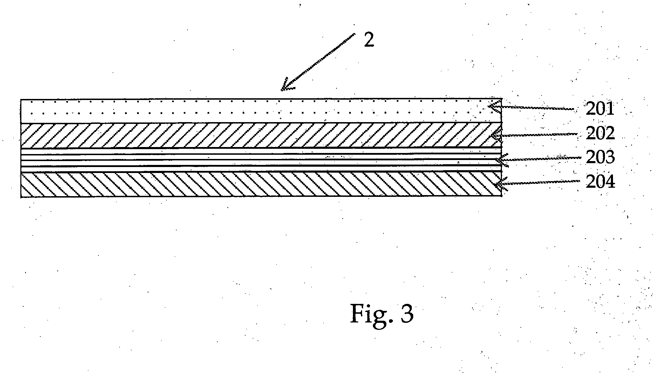

- Fig. 3: shows a section through a carrier body 2 comprising four layers of reinforcing fibre cloth in linen weave at different angles, here layer 201 at 0°, layer 202 at 22.5°, layer 203 at 45°, and layer 204 at 67.5°, and

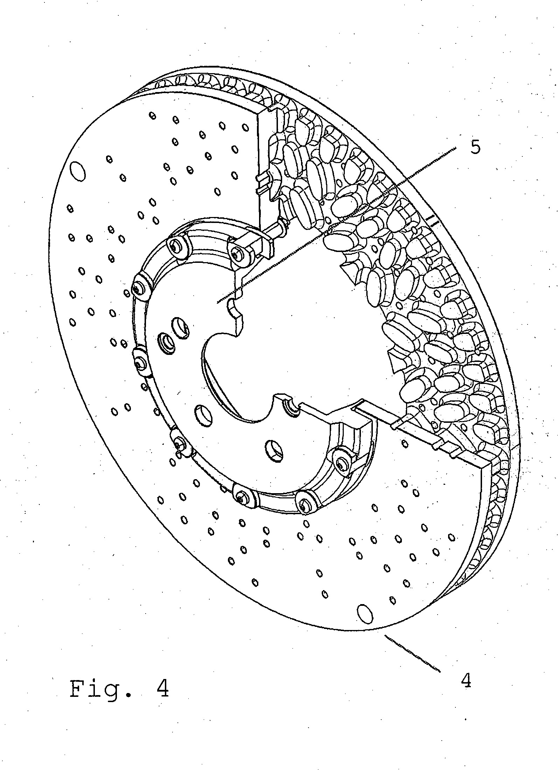

- Fig. 4: shows a view of an multilayer brake disk 4 with the layer sequence of Fig. 1a, and ventilation layer according to Fig. 2, mounted on a hub 5.

By appropriate choice of the sequence and thickness of the individual layers, it is easily possible to adapt the brake disk to the intended purpose. Usually, the friction layers have a thickness of from 1 mm to 5 mm, the ventilation layers have a thickness (which is approximately equivalent to the height of the cooling channels or cooling ducts) of from 5 mm to 20 mm, and the carrier bodies have a thickness of from 3 mm to 20 mm. Particularly in the case where carbon fibre cloth is used as reinforcing element in the carrier body, a construction as explained in Fig. 1e with carrier bodies as outer layers, and without separate friction layers is also possible and gives satisfactory results.

The rims used during the assembly to facilitate the stacking may be removed by grinding of turning in the carbonised state, or by grinding in the ceramic state, i. e. after infiltration with liquid silicon, or mixtures thereof.

### Example

A green body for a friction layer was prepared as follows:
7.5 kg of silicon carbide powder having an average particle diameter of 40 µm were mixed with 2.5 kg of a phenol resol resin (®Cellobond 1203, Momentive Specialty Chemicals Inc.). This mixture was press moulded to form flat cylinder ring disks having a thickness of 3 mm, an outer circumference of 400 mm and an inner circumference of 200 mm and cured at 180 °C.

A green body for a ventilation layer was injection moulded from a mixture of an aromatic polyester resin (bisphenol A- isophthalate-terephthalate copolymer) and a mass fraction of 25 %, based on the mass of the mixture, of a powdery pitch of reduced smoking propensity having a softening temperature of 235 °C, using a mould according to Fig. 2 having in inner diameter, up to the inner rim, of 199 mm, and an outer diameter, including the outer rim, of 401 mm, a rim thickness of 1 mm, and a rim height below the base plate of 6 mm and beyond the ribs and stubs, also of 6 mm. The height of the ribs and stubs over the base plate was 15 mm.

For the carrier body, a woven carbon fibre tape made of 3 k filament bundles impregnated with phenolic resin (®Cellobond 1203) was punched to circular rings having an inner diameter of 200 mm and an outer diameter of 400 mm.

A stack of ten of these rings with a circular displacement of 36° each with regard to the predecessor ring were fixed to each side of the green body for the ventilation layer inside the rims thereof, both sides of the resulting stacks were covered with a green body for the friction layer, the assembly was put into a press mould and pressed at 180 °C with 0.5 MPa for one hour. After cooling to room temperature, the multi-layer green body was subjected to carbonisation at 900 °C, and was the subjected to infiltration with liquid silicon at 1680 °C. After cooling, the inner and outer rim were removed by grinding, the friction layers were drilled to form perforation holes, and the surface of the friction layer was then polished.

The brake disk showed very good rotational stability (in excess of 5000 min⁻¹).

## Claims

1. A multi-layered carbon ceramic brake disk having at least one carrier body, and at least one ventilation layer that comprises ventilation ducts, and at least one friction layer, made by joining green bodies of at least one individual carrier body, and of at least one individual ventilation layer, and of at least one individual friction layer, which green bodies comprise thermoplastic or thermoset polymeric materials, in their solid or cured states, and by subsequent carbonisation and ceramicisation by infiltration with carbide-forming elements, **characterised in that** the multi-layered carbon ceramic brake disk has a symmetrical structure with a sequence of layers of a friction layer, a carrier body, a ventilation layer comprising ventilation ducts, a second carrier body, and a second friction layer.

2. A process for the preparation of the multi-layered carbon ceramic brake disk of claim 1 which process comprises
- preparation of a green body for a friction layer by injection moulding or press moulding a mixture comprising a thermoplastic or thermoset polymeric material and at least one of fillers and additives which influence the tribological behaviour, or by tape casting a suspension comprising a particulate ceramic material, at least one of a dissolved or emulsified resinous binder having a high carbon yield upon carbonisation, and selected from the group consisting of phenolic resins, epoxy resins, and furane resins, and particulate carbon preferably in the form of ground coke or of graphite flake, thermoplastic or thermoset polymeric material and at least one of fillers and additives which influence the tribological behaviour,
- preparation of a green body for a carrier body by press moulding a mixture comprising a thermoset resin binder, and reinforcing fibres,
- preparation of a green body for a ventilation layer by press moulding a mixture comprising a thermoplastic or thermoset polymeric material, together with cores having substantially the form of the ventilation ducts to be formed, or injection moulding a thermoplastic or thermoset polymeric material into a mould having substantially the form of the ribs or fins or stubs enclosing the ventilation ducts,
- optionally, applying to the interfaces formed in the stack between the said green bodies, an adhesive consisting of at least one of a solution, a paste, and a particulate or powdery solid matter, to improve the bonding between these layers,
- stacking the green bodies of the at least one friction layer, of the at least one carrier body, of the at least one ventilation layer comprising ventilation ducts, to form a stack, where the stack has the green body for the friction layer as first and last element of the stack,
- optionally, subjecting this stack to an optional pressure and thermal treatment, to improve the bonding between these layers,
- subjecting the stack to pyrolysis in a non-oxidising atmosphere under heat, to form a carbonised body, and
- infiltration with a liquid carbide-forming material, which material preferably comprises silicon, to form a ceramic body having a matrix comprising a carbide, preferably silicon carbide.

3. The process of claim 2 wherein the green body for a carrier body comprises layers of reinforcing fibres in the form of the so-called UD-tapes, which comprise filaments in parallel alignment bound by impregnation with a thermoplastic or thermoset polymeric material, or in the form of non-woven or woven fibre mats which are impregnated with a thermoplastic or thermoset polymeric material.

4. The process of claim 3 wherein the reinforcing fibres are carbon fibres.

5. The process of claim 3 wherein the green body for the carrier body comprises at least two layers of reinforcing fibres.

6. The process of claim 2 wherein the green body for a carrier body comprises layers of reinforcing fibres wherein filament bundles are laid in the from of a series of concentric circles.

7. The process of claim 2 wherein the green body for a friction layer comprises a thermoplastic or thermoset polymeric material.

8. The process of claim 2 wherein the green body for the friction layer is made by mixing a phenolic resin or a mixture of a phenolic resin and a pitch, with additives selected from the group consisting of particulate carbon in the form of ground coke, graphite powder, carbon short fibres having an average length of not more than 5 mm, carbon microspheres, powders of carbide forming metals such as silicon, titanium, vanadium, or chromium, and other metals of the groups of the latter three, and powdery non-oxide ceramics such as silicon carbide, silicon nitride, or boron carbide.

9. The process of claim 2 wherein the green body for the ventilation layer comprises a base plate which has ribs or fins or stubs on one side, or on both sides of the base plate.

10. The process of claim 9 wherein the green body for the ventilation layer comprises an inner circular rim at the inner circumference and an outer rim at the outer circumference of the base plate which rims form a part of a cylinder jacket at the inner and outer circumferences.

11. The process of claim 2 wherein the stack is pressed and heated, then subjected to carbonisation under exclusion of oxydants at a temperature of preferably from 750 °C to 1300 °C to form a composite body of porous carbon also comprising reinforcing fibres and fillers, and wherein the composite body of porous carbon is finally subjected to infiltration with silicon or a mixture containing a mass fraction of at least 50 % of silicon, and to formation of silicon carbide, and carbides of other carbide-forming elements present in the mixture with silicon, at a temperature of at least 1420 °C.

## Patentansprüche

1. Mehrschichtige Karbon-Keramik-Bremsscheibe mit wenigstens einem Trägerkörper und wenigstens einer Belüftungsleitungen umfassenden Belüftungsschicht, und wenigstens einer Reibschicht, hergestellt durch das Zusammenfügen von Grünlingen wenigstens eines einzelnen Trägerkörpers und wenigstens einer einzelnen Belüftungsschicht und wenigstens einer einzelnen Reibschicht, wobei diese Grünlinge thermoplastische oder duroplastische Polymermaterialien im festen oder gehärteten Zustand umfassen, und durch nachfolgendes Karbonisieren und Keramisieren durch Infiltration mit Carbid bildenden Elementen, **dadurch gekennzeichnet, dass** die mehrschichtige Karbon-Keramik-Bremsscheibe einen symmetrischen Aufbau aufweist mit einer Abfolge von Schichten bestehend aus einer Reibschicht, einem Trägerkörper, einer Belüftungsschicht mit Belüftungsleitungen, einem zweiten Trägerkörper und einer zweiten Reibschicht.

2. Verfahren zur Herstellung der mehrschichtigen Karbon-Keramik-Bremsscheibe nach Anspruch 1, wobei das Verfahren Folgendes umfasst:
- Herstellen eines Grünlings für eine Reibschicht durch Spritzgießen oder Formpressen eines Gemischs, das ein thermoplastisches oder duroplastisches Polymermaterial und ein Füllmaterial und/oder Verschleißverhalten beeinflussende Zusatzstoffe umfasst, oder durch Foliengießen einer Suspension, die Folgendes enthält: ein partikelförmiges keramisches Material, einen gelösten und/oder einen emulgierten harzigen Binder mit einer hohen Kohlenstoffausbeute bei Karbonisierung und ausgewählt aus einer Gruppe bestehend aus Phenolharzen, Epoxidharzen und Furanharzen, und partikelförmigen Kohlenstoff vorzugsweise in Form von gemahlenem Koks oder Graphitflocken, thermoplastisches oder duroplastisches Polymermaterial und Füllmaterialien und/oder das Verschleißverhalten beeinflussende Zusatzstoffe,
- Herstellen eines Grünlings für einen Trägerkörper durch Formpressen eines Gemisches, das einen Duroplastharzbinder und Verstärkungsfasern enthält,
- Herstellen eines Grünlings für eine Belüftungsschicht durch Formpressen eines Gemisches, das ein thermoplastisches oder duroplastisches Polymermaterial enthält, zusammen mit Kernen, die im Wesentlichen die Form der zu bildenden Belüftungsleitungen aufweisen, oder durch Spritzgießen eines thermoplastischen oder duroplastischen Polymermaterials in eine Form, die im Wesentlichen die Form der die Belüftungsleitungen umschließenden Rippen oder Finnen oder Stummel aufweist,
- optional, bezogen auf die Grenzschichten, die im Stapel zwischen den Grünlingen ausgebildet sind, ein Klebstoff bestehend aus einer Lösung, einer Paste und/oder einer partikelförmigen oder pulverartigen festen Substanz, um die Bindung zwischen diesen Schichten zu verbessern,
- Stapeln der Grünlinge der wenigstens einen Reibschicht, des wenigstens einen Trägerkörpers, der wenigstens einen Belüftungsschicht mit Belüftungsleitungen, um einen Stapel zu bilden, in dem der Grünling für die Reibschicht das erste und das letzte Element des Stapels bildet,
- optional, Aussetzen des Stapels einer optionalen Druck- und Wärmebehandlung, um die Bindung zwischen diesen Schichten zu verbessern,
- Aussetzen des Stapels einer Pyrolyse in einer nicht oxidierenden Atmosphäre unter Hitze, um einen karbonisierten Körper zu bilden, und
- Infiltrieren mit einem flüssigen Carbid bildenden Material, das vorzugsweise Silizium enthält, um einen Keramikkörper zu formen, der eine Matrix bestehend aus Carbid, vorzugsweise Siliziumcarbid, aufweist.

3. Verfahren nach Anspruch 2, wobei der Grünling für einen Trägerkörper Schichten aus Verstärkungsfasern in Form so genannter UD-Bänder aufweist, die parallel ausgerichtete Fasern, gebunden durch Imprägnieren mit einem thermoplastischen oder duroplastischen Polymermaterial, umfassen, oder in Form von Vlies- oder gewebten Fasermatten, die mit einem thermoplastischen oder duroplastischen Polymermaterial imprägniert sind.

4. Verfahren nach Anspruch 3, wobei die Verstärkungsfasern Kohlenstofffasern sind.

5. Verfahren nach Anspruch 3, wobei der Grünling für den Trägerkörper wenigstens zwei Schichten von Verstärkungsfasern aufweist.

6. Verfahren nach Anspruch 2, wobei der Grünling für einen Trägerkörper Schichten von Verstärkungsfasern aufweist, wobei Faserbündel in Form von aneinandergereihten konzentrischen Kreisen gelegt sind.

7. Verfahren nach Anspruch 2, wobei der Grünling für eine Reibscheibe ein thermoplastisches oder duroplastisches Polymermaterial aufweist.

8. Verfahren nach Anspruch 2, wobei der Grünling für die Reibscheibe durch Mischen eines Phenolharzes oder eines Phenolharz-Pech-Gemisches mit Zusatzstoffen, ausgewählt aus der Gruppe bestehend aus partikelförmigem Kohlenstoff in Form von gemahlenem Koks, Graphitpulver, kurzen Kohlenstofffasern mit einer durchschnittlichen Länge von höchstens 5 mm, Kohlenstoff-Mikrokugeln, Pulver aus Carbid bildenden Metallen wie etwa Silizium, Titan, Vanadium oder Chrom, und anderen Metallen der Gruppen der drei zuletzt Genannten, und pulverartigen Nichtoxidkeramiken, wie etwa Siliziumcarbid, Siliziumnitrid oder Borcarbid hergestellt wird.

9. Verfahren nach Anspruch 2, wobei der Grünling für die Belüftungeschicht eine Grundplatte mit Rippen oder Finnen oder Stummeln an einer Seite oder auf beiden Seiten der Grundplatte aufweist.

10. Verfahren nach Anspruch 9, wobei der Grünling für die Belüftungsschicht einen inneren kreisförmigen Rand am inneren Umfang und einen äußeren Rand am äußeren Umfang der Grundplatte aufweist, wobei die Ränder einen Teil eines Zylindermantels am inneren und äußeren Umfang bilden.

11. Verfahren nach Anspruch 2, wobei der Stapel gepresst und erhitzt wird, dann einer Karbonisierung unter Ausschluss von Oxidantien bei einer Temperatur von vorzugsweise 750 °C bis 1.300 °C ausgesetzt wird, um einen Verbundkörper aus porösem Kohlenstoff zu bilden, der auch Verstärkungsfasern und Füllstoffe enthält, und wobei der Verbundkörper aus porösem Kohlenstoff abschließend Folgendem ausgesetzt wird: einem Infiltrieren mit Silizium oder einem Gemisch mit einem Massenanteil von wenigstens 50 % Silicium und dem Bilden von Siliziumcarbid und Carbiden anderer Carbid formender Elemente, die in dem Gemisch mit Silizium vorhanden sind, bei einer Temperatur von wenigstens 1.420 °C.

## Revendications

1. Disque de frein carbone-céramique multicouche comportant au moins un corps support, et au moins une couche de ventilation qui comprend des conduites de ventilation, et au moins une couche de frottement, réalisée en joignant des ébauches crues d'au moins un corps support individuel, et d'au moins une couche de ventilation individuelle, et d'au moins une couche de frottement individuelle, lesquelles ébauches crues comprennent des matériaux polymériques thermoplastiques ou thermodurcis, dans leurs états solides ou durcis, et par carbonisation et céramisation ultérieures par infiltration avec des éléments formant des carbures, **caractérisé en ce que** le disque de frein carbone-céramique multicouche présente une structure symétrique dans un ordre de couches consistant en une couche de frottement, un corps support, une couche de ventilation comprenant des conduites de ventilation, un second corps support et une seconde couche de frottement.

2. Procédé de préparation du disque de frein carbone-céramique multicouche de la revendication 1, lequel procédé comprend
- la préparation d'une ébauche crue pour une couche de frottement par moulage par injection ou procédé moulé-pressé d'un mélange comprenant un matériau polymérique thermoplastique ou thermodurci et au moins l'un parmi des charges et des additifs qui influencent le comportement tribologique, ou par coulage en bande d'une suspension comprenant un matériau céramique particulaire, au moins l'un parmi un liant résineux dissous ou émulsifié ayant un rendement élevé de carbone lors d'une carbonisation, et choisi dans le groupe constitué par les résines phénoliques, les résines époxy et les résines de furane, et un carbone particulaire de préférence sous forme de coke broyé ou de lamelle de graphite, un matériau polymérique thermoplastique ou thermodurci et au moins l'un parmi des charges et des additifs qui influencent le comportement tribologique,
- la préparation d'une ébauche crue pour un corps support par procédé moulé-pressé d'un mélange comprenant un liant de résine thermodurci et des fibres de renforcement,
- la préparation d'une ébauche crue pour une couche de ventilation par procédé moulé-pressé d'un mélange comprenant un matériau polymérique thermoplastique ou thermodurci, conjointement avec des noyaux ayant sensiblement la forme de conduites de ventilation à former, ou par moulage par injection d'un matériau polymérique thermoplastique ou thermodurci dans un moule ayant sensiblement la forme des nervures ou ailettes ou embases renfermant les conduites de ventilation,
- facultativement, l'application sur les interfaces formées dans la pile entre lesdites ébauches crues, d'un adhésif constitué par au moins l'une d'une solution, d'une pâte et d'une matière solide particulaire ou pulvérulente, pour améliorer la liaison entre ces couches,
- l'empilement des ébauches crues de l'au moins une couche de frottement, de l'au moins un corps support, de l'au moins une couche de ventilation comprenant des conduites de ventilation, pour former une pile, la pile comportant les ébauches crues pour la couche de frottement en tant que premier et dernier élément de la pile,
- facultativement, le fait de soumettre cette pile un traitement thermique et de pression facultatif, pour améliorer la liaison entre ces couches,
- le fait de soumettre la pile à une pyrolyse dans une atmosphère non oxydante à la chaleur, pour former un corps carbonisé, et
- l'infiltration avec un matériau liquide formant des carbures, lequel matériau comprend de préférence du silicium, pour former un corps en céramique ayant une matrice comprenant un carbure, de préférence du carbure de silicium.

3. Procédé selon la revendication 2, dans lequel l'ébauche crue pour un corps support comprend des couches de fibres de renforcement sous forme de bandes dites UD, qui comprennent des filaments en alignement parallèle liés par imprégnation avec un matériau polymérique thermoplastique ou thermodurci, ou sous forme de mats de fibres non tissées ou tissées qui sont imprégnés avec un matériau polymère thermoplastique ou thermodurci.

4. Procédé selon la revendication 3, dans lequel les fibres de renforcement sont des fibres de carbone.

5. Procédé selon la revendication 3, dans lequel l'ébauche crue pour le corps support comprend au moins deux couches de fibres de renforcement.

6. Procédé selon la revendication 2, dans lequel l'ébauche crue pour un corps support comprend des couches de fibres de renforcement dans lesquelles des faisceaux de filaments sont déposés sous forme d'une série de cercles concentriques.

7. Procédé selon la revendication 2, dans lequel l'ébauche crue pour une couche de frottement comprend un matériau polymérique thermoplastique ou thermodurci.

8. Procédé selon la revendication 2, dans lequel l'ébauche crue pour la couche de frottement est réalisée en mélangeant une résine phénolique ou un mélange d'une résine phénolique et d'une poix, avec des additifs choisis dans le groupe constitué par le carbone particulaire sous forme de coke broyé, de la poudre de graphite, des fibres courtes de carbone ayant une longueur moyenne non supérieure à 5 mm, des microsphères de carbone, des poudres de métaux formant des carbures tels que le silicium, le titane, le vanadium ou le chrome, et d'autres métaux des groupes des trois derniers, et des céramiques non-oxydes pulvérulentes telles que le carbure de silicium, le nitrure de silicium ou le carbure de bore.

9. Procédé selon la revendication 2, dans lequel l'ébauche crue pour la couche de ventilation comprend une plaque de base qui comporte des nervures ou ailettes ou embases sur un côté, ou sur les deux côtés de la plaque de base.

10. Procédé selon la revendication 9, dans lequel l'ébauche crue pour la couche de ventilation comprend un bord circulaire intérieur au niveau de la circonférence intérieure et un bord extérieur au niveau de la circonférence extérieure de la plaque de base, lesquels bords forment une partie d'une chemise de cylindre au niveau des circonférences intérieure et extérieure.

11. Procédé selon la revendication 2, dans lequel la pile est pressée et chauffée, puis soumise à une carbonisation à l'exclusion d'oxydants à une température de préférence de 750 °C à 1 300 °C pour former un corps composite de carbone poreux comprenant également des fibres de renforcement et des charges, et dans lequel le corps composite de carbone poreux est enfin soumis à une infiltration de silicium ou d'un mélange contenant une fraction de masse d'au moins 50 % de silicium, et à une formation de carbure de silicium, et des carbures d'autres éléments formant des carbures présents dans le mélange avec du silicium, à une température d'au moins 1 420 °C.
